# EUROPEAN PATENT SPECIFICATION

(11) **EP 3 187 440 B1**
(45) Date of publication and mention of the grant of the patent: **27.05.2020**
(21) Application number: 15003684.6
(22) Date of filing: 29.12.2015
(51) Int. Cl.: B65G 57/00, B65G 61/00

(54) **PALLETISER STATION**
PALETTIERERSTATION
STATION DE PALETTISATION

(43) Date of publication of application: 05.07.2017
(73) Proprietor: CSi Industries B.V., 4941 VL Raamsdonksveer (NL)
(72) Inventor: CATS, Hein Peter, 4273 LH Hank (NL)
(74) Representative: Griebling, Onno

(56) References cited:
- EP-A1- 0 976 671
- WO-A1-00/20309
- GB-A- 1 524 974

## Description

### FIELD OF THE INVENTION

The present invention relates in general to a palletiser.

### BACKGROUND OF THE INVENTION

In the field of transporting of goods, it is known that the goods, usually boxes of standard size, are placed on standard carrier platforms indicated as pallet. Pallets come in many sizes, but roughly they typically measure about 90cm x 110cm. The goods (boxes) are stacked on the pallet in layers, up to a height of perhaps some 2m. Care is taken that the goods do not project beyond the pallet periphery. For added safety, a foil may be wrapped around the stack. When ready, the pallet with the goods is transported towards a storage or a loading deck for a truck.

The process of arranging the goods on the pallet is termed "palletising".

Palletising can be done manually, but is nowadays typically done automatically by robots indicated as "palletiser".

A palletiser station comprises, apart from the palletiser itself, a transport mechanism for handling three transport streams:
1) a supply stream for supplying goods to be palletised;
2) a supply stream for supplying empty pallets;
3) a supply stream for removing full pallets.

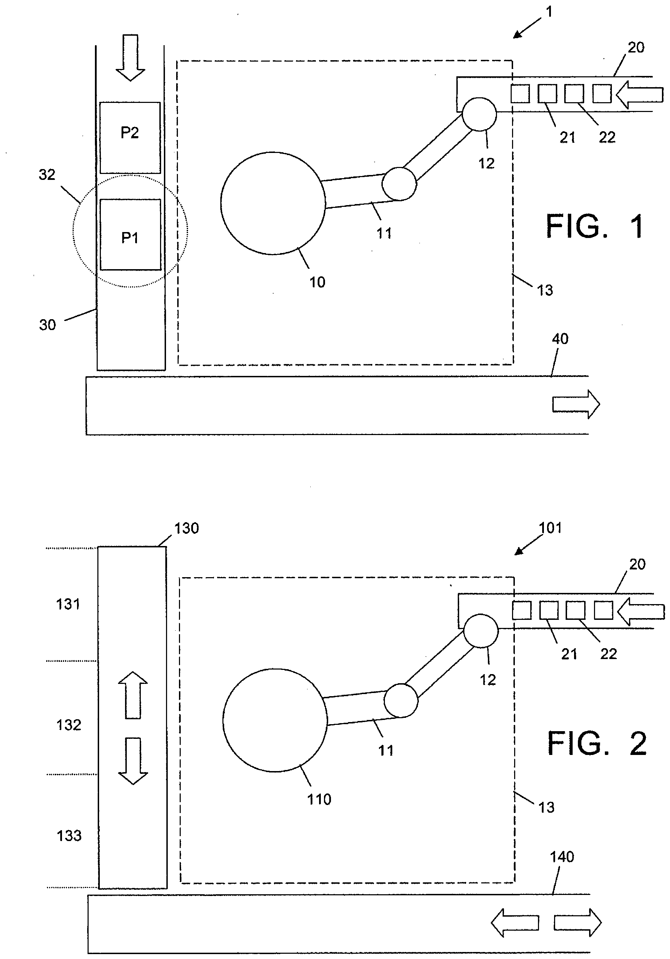

Figure 1 is a schematic top view of a characteristic prior art palletiser station 1. A palletiser is indicated at reference numeral 10. It comprises a manipulator arm 11, that at its free end is provided with gripping means 12. The manipulator arm 11 is typically a versatile arm, that is capable of grabbing, holding, lifting, manipulating and placing goods. The palletiser 10 can turn around its vertical axis to displace the arm 11. Reference numeral 13 indicates a safety cage arranged around the palletiser 10.

Reference numeral 20 indicates a goods conveying system for conveying goods 21 towards the palletiser station 1. The conveying system may for instance comprise a conveyor belt or conveyor rollers.

Reference numeral 30 indicates a pallet supply conveying system for conveying empty pallets P towards the palletiser station 1. The pallet supply conveying system may for instance comprise a conveyor belt or, preferably, conveyor rollers. The pallet supply conveying system 30 supplies a first empty pallet P1, and holds it steady at a loading position in a loading zone 32 of the palletiser station 1. The palletiser 10 receives an item 21 from the goods conveying system 20, turns, and places the item onto the first empty pallet P1. The palletiser 10 turns back to receive a next item 22. The palletiser 10 turns and places the next item 22 adjacent the first item 21. This is repeated, with subsequent items being placed adjacent to or atop of previous items, until the first pallet P1 is full. It is noted that palletisers for placing items on pallets are known per se, so that a further more detailed description of the palletiser is omitted here.

When full, the first pallet P1 is conveyed out of the loading zone 32 by pallet supply conveying system 30. At the same time, a next empty pallet P2 is moved forwards into the loading zone 32 to take the place of the previous pallet 31A, and the above-described cycle is repeated for loading the second pallet P2. After leaving the loading zone 32, the full first pallet P1 is handed over to a pallet removal conveying system 40, that removes the full pallets away from the palletiser station 1, towards a storage facility or further processing system such as a truck loading system, which are however not shown for sake of simplicity.

Document WO 00/20309 A discloses a palletiser station according to the preamble of claim 1.

### SUMMARY OF THE INVENTION

It is thus to be seen that the palletiser station 1 requires the floor space for a pallet supply conveying system 30 for conveying empty pallets P towards the palletiser 10 as well as floor space for a pallet removal conveying system 40. It is an objective of the present invention to provide a palletiser station that occupies less floor space.

In the prior art systems, the pallet supply conveying system 30 is a monodirectional conveying system and the pallet removal conveying system 40 is a monodirectional conveying system. Pallets always travel in one direction along a path defined by the supply conveyor and the removal conveyor, approaching the palletiser as empty pallet, being hold steady adjacent the palletiser for being loaded, and leaving the palletiser as full pallet. The present invention proposes a palletiser station according to the appended claim 1, with a bi-directional pallet conveying system, where empty pallets travel in one direction towards the palletiser while full pallets travel in the opposite direction away from the palletiser. At the palletiser, a next empty pallet passes the stationary pallet that is currently being loaded, for which purpose the stationary pallet is lifted to allow the next empty pallet to pass under it. The present invention also proposes a method for operating a palletiser station according to the appended claim 7.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figure 1 is a schematic top view of a characteristic prior art palletiser station;
figure 2 is a schematic top view similar to figure 1 of a palletiser station according to the present invention;
figures 3A-G are schematic top views illustrating subsequent stages of the palletising process according to the present invention;
figures 4A-E are schematic side views illustrating subsequent stages of the palletising process according to the present invention.

### DETAILED DESCRIPTION OF THE INVENTION

Figure 2 schematically shows a top view of a palletiser station 101 according to the present invention. Reference numeral 110 indicates a palletiser. Since palletiser robots are known per se, and since the design of the palletiser robot is not essential for understanding the invention while the invention can be implemented with various types of palletiser robots, the palletiser robot will not be described in more detail here.

Reference numeral 130 indicates a short-track pallet manoeuvring conveying system, communicating at one end with a bi-directional pallet supply/removal conveying system 140. In the example shown, conveying systems 130 and 140 have their conveying directions perpendicular to each other, but that is not essential.

As will be evident from the following, the short-track pallet manoeuvring conveying system 130 is a bi-directional system, capable of conveying pallets in a forward direction and in a backward direction. In an embodiment, the short-track pallet manoeuvring conveying system 130 may conveniently be of a type that comprises rotating rollers carrying the pallets. The rollers are driven by a controlled motor, that is capable of driving the rollers in either way or keeping the rollers stationary. Since a roller system with such drive system is known per se, a more detailed description is omitted here.

The bi-directional pallet supply/removal conveying system 140 may also be a system of the rotating rollers type, but alternatively and preferably the pallet supply/removal conveying system 140 comprises a rail carriage riding on a rail track. Since rail carriages riding on a rail track are known per se, a more detailed description is omitted here.

The short-track pallet manoeuvring conveying system 130 comprises three consecutive track sections 131, 132, 133, each section having a size sufficient for accommodating one pallet, preferably with some margin. A suitable length for the short-track pallet manoeuvring conveying system 130 is about 4m, for pallets of a size of about 1m square. In the following, the central track section 132 will be indicated as the loading section. The track section 133 between the central track section 132 and the pallet supply/removal conveying system 140 will be indicated as the transfer section. The track section 131 opposite the transfer section 133, i.e. remote from the pallet supply/removal conveying system 140, will be indicated as the waiting section.

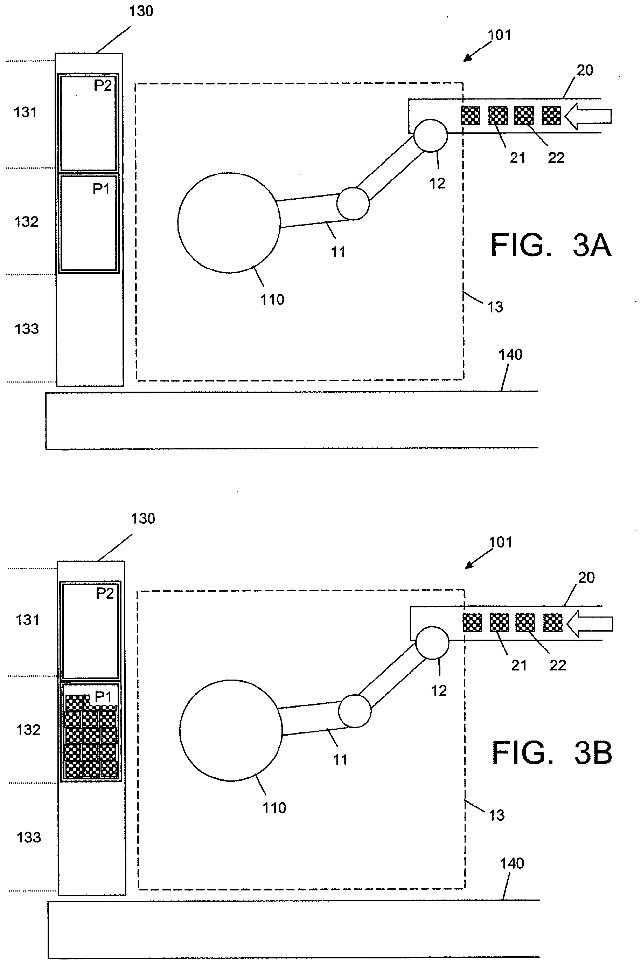

Figures 3A-G are schematic top view comparable to figure 2, illustrating subsequential stages of the palletising process according to the present invention. In the following explanation, like before, pallets in general are indicated as "P" while individual pallets are indicated as "P" followed by a numeral.

For starting the explanation, it is assumed that two empty pallets are located at track sections 131, 132 of the short-track pallet manoeuvring conveying system 130. Particularly, as illustrated in figure 3A, a first empty pallet P1 is located at the loading section 132 and a second empty pallet P2 is located at the waiting section.

Palletising is always done in respect of a pallet P located at the loading section 132. Thus, in a first stage of the palletising process according to the present invention, palletising is done in respect of the first pallet P1, i.e. goods are arranged on this first pallet P1, until the first pallet P1 is "full" or in any case "ready". The first pallet P1 is now a "loaded" pallet, indicated in figure 3B.

It is noted that, during palletising, the two pallets P1 and P2 are kept stationary. This can be done by pausing the conveying action of the conveying system 130, for instance by pausing the motor drive of the rollers, or by operating a stop that prevents the pallets from proceeding although the rollers keep rotating.

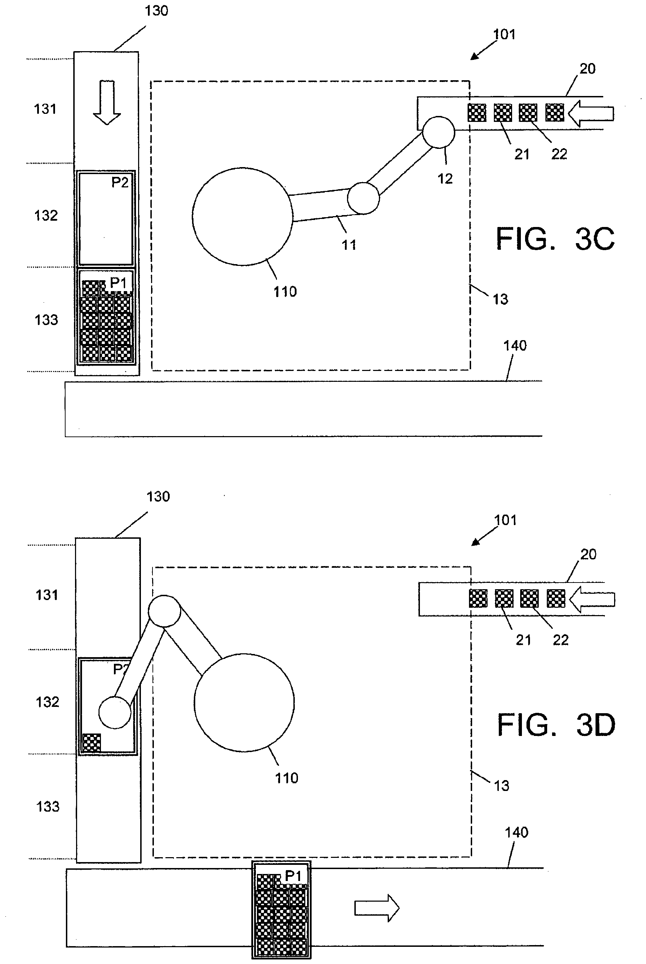

In a second stage of the palletising process according to the present invention, the short-track pallet manoeuvring conveying system 130 is actuated to move the two pallets P1 and P2 in the forward direction, i.e. towards the pallet supply/removal conveying system 140. Thus, the loaded first pallet P1 is moved forward from the loading section 132 to the transfer section 133 and the empty second pallet P2 is moved forward from the waiting section 131 to the loading section 132. The situation then achieved is illustrated in figure 3C.

In a third stage of the palletising process according to the present invention, the short-track pallet manoeuvring conveying system 130 is controlled to hold the second pallet P2 stationary at the loading section 132 while the loaded first pallet P1 is moved forward. While the empty second pallet P2 was moved forward from the waiting section 131 to the loading section 132, the loading operation of the palletiser 110 was preferably interrupted, but now that the second pallet P2 is held stationary at the loading section 132, the palletiser 110 continues its palletising operation by loading the second pallet P2. At the same time the loaded first pallet P1 is moved forward and transferred from the transfer section 133 to the pallet supply/removal conveying system 140, assuming that the pallet supply/removal conveying system 140 is ready to receive the loaded first pallet P1 (if not, control may keep the loaded first pallet P1 at the transfer section 133 to wait for the pallet supply/removal conveying system 140). Transferring the loaded first pallet P1 from the transfer section 133 to the pallet supply/removal conveying system 140 may be done in any suitable manner, for instance by a pushing device (not shown) engaging the pallet.

It is noted that, for the short-track pallet manoeuvring conveying system 130 to move the loaded first pallet P1 forward while keeping the second pallet P2 stationary, it is possible that the conveying drive of the transfer section 133 is separate from the conveying drive of the loading section 132 and control can drive or not drive these sections independently from one another, but it is also possible that these sections have a common drive while the loading section 132 is equipped with a controllable stop that holds the second pallet P2 although the loading section 132 tries to convey the second pallet P2.

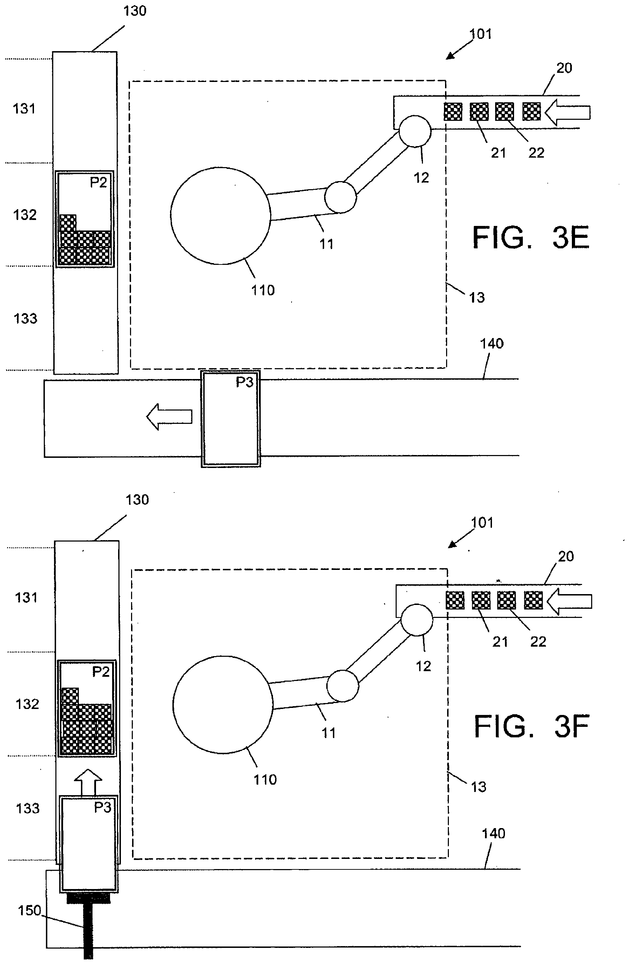

Having received the loaded first pallet P1, in a fourth stage of the palletising process according to the present invention, the pallet supply/removal conveying system 140 is actuated to move the loaded first pallet P1 forward, away from the palletiser 110, as illustrated in figure 3D. For the purpose of the present invention, it is not relevant where the loaded first pallet P1 is delivered, and how the loaded first pallet P1 is taken off from the conveying system. What is important is that the pallet supply/removal conveying system 140 is adapted to receive at some point a third empty pallet P3, and to convey that empty pallet P3 backwards in a fifth stage, as illustrated in figure 3E, to be positioned opposite the transfer section 133.

It is not important where, along the length of the pallet supply/removal conveying system 140, empty pallet P3 is placed on the system 140, and it is not important how. Manipulators capable of manipulating an empty pallet, lifting it from a store of from a supply conveyor, and placing it on system 140 are known per se and suitable for this task. It is only important that the empty pallet P3 is placed on the system 140 after the loaded first pallet P1 has passed. It is further important that the pallet supply/removal conveying system 140 has reversible drive, so that, with the empty pallet P3 placed on the system 140, system 140 can be controlled to reverse the transport direction and convey the empty pallet P3 towards the palletiser 110. In case the pallet supply/removal conveying system 140 is of the type comprising a carriage riding on a track, it is possible that the track has a switch (Y-spot), so that, after a carriage with the loaded first pallet P1 has passed towards one leg of the switch, another carriage with the empty pallet P3 can ride down the other leg.

It should be clear to a person skilled in the art that, the further the position of placing the next empty pallet P3 onto system 140 is removed from the palletiser 110, the more time since departure of the loaded first pallet P1 from the transfer section 133 it will take before the third empty pallet P3 arrives opposite the transfer section 133. This time is however not wasted, because during that time the palletiser 110 has continued loading the second pallet P2. It is an important aspect of the present invention that the pallet supply/removal conveying system 140 is used to operate more efficiently, i.e. to supply an empty pallet during an interval when no loaded pallet needs to be removed yet.

In a seventh stage of the palletising process according to the present invention, the pallet supply/removal conveying system 140 is controlled to remain stationary, and the third empty pallet P3 is transferred onto the transfer section 133 of the short-track pallet manoeuvring conveying system 130, as illustrated in figure 3F. In an exemplary embodiment, the palletiser station 101 comprises for that purpose a controllable pusher 150, as is known per se and therefore neither discussed nor shown in detail.

According to an important aspect of the present invention, the palletiser station 101 comprises a lifting device 160 associated with the loading section 132 for lifting the second pallet P2 to an elevated level sufficiently high so that an empty pallet P can pass below the second pallet P2 in its elevated condition.

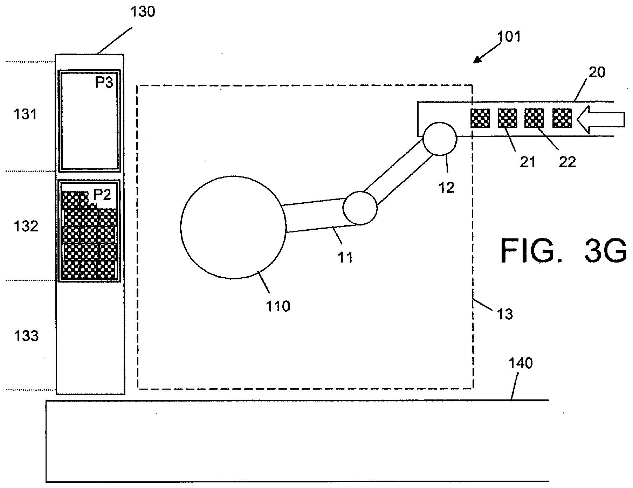

Thus, in an eighth stage of the palletising process according to the present invention, with the second pallet P2 in its elevated condition, the short-track pallet manoeuvring conveying system 130 is actuated to reverse drive, to convey the third empty pallet P3 from the transfer section 133 to the waiting section 131, passing below the elevated second pallet P2 when passing the loading section 132. The resulting situation is illustrated in figure 3G.

In a ninth stage of the palletising process according to the present invention, the short-track pallet manoeuvring conveying system 130 is actuated to stop drive, with the third empty pallet P3 held stationary at the waiting section 131, and the lifting device 160 is controlled to lower the second pallet P2 back down onto the loading section 132.

In a tenth stage of the palletising process according to the present invention, loading of the second pallet P2 continues, until this second pallet P2 is a "loaded" pallet. Then, the situation illustrated in figure 3B has been reached again, and the above-described operation cycle is repeated.

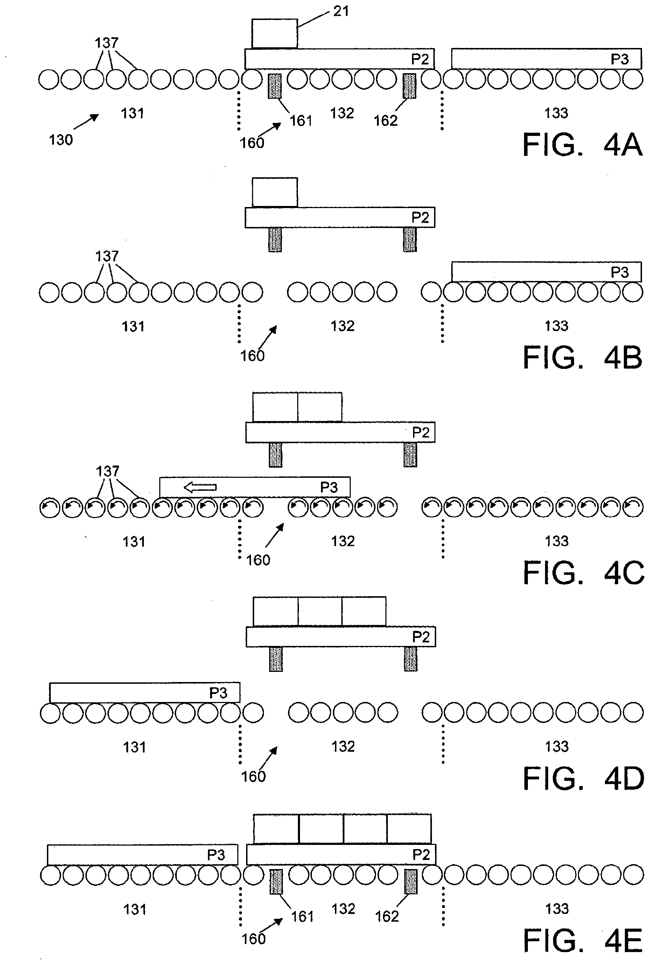

Figures 4A-E are schematic side views of the short-track pallet manoeuvring conveying system 130 illustrating the important aspects of the operation of this system. In these figures, the conveying system 130 is conveniently shown as being of a type with rotating rollers.

In the situation shown in figure 4A, the third empty pallet P3 has arrived at the transfer section 133. The second pallet P2 is shown in its lowest position, resting on the stationary loading section 132.

In the situation shown in figure 4B, the second pallet P2 is shown in an elevated condition, lifted by lifting device 160.

In the situation shown in figure 4C, the second pallet P2 still being in its elevated condition, the third empty pallet P3 is shown passing in backwards direction below the second pallet P2. Arrows in the rollers 137 indicate the conveying action of the conveying system 130.

In the situation shown in figure 4D, the second pallet P2 still being in its elevated condition, the third empty pallet P3 has arrived at the waiting section 131 and the conveying system 130 is halted. It is shown that the loading operation has continued.

In the situation shown in figure 4E, the lifting device 160 has lowered the second pallet P2 back down to rest on the conveying system 130 again.

Various designs will be possible for the lifting device 160, but in the embodiment shown the lifting device 160 comprises a lifting fork having two or more parallel lifting bars 161, 162 located between the rollers 137 of the conveying system 130. In a resting condition, the lifting bars 161, 162 are at such level that their top surfaces are lower than the carrying level of the rollers 137, as shown in figure 4A. When the lifting device 160 is lifting, the lifting bars 161, 162 are raised to contact the pallet P2 and take it upwards, as shown in figure 4B. When the lifting device 160 is lowering, the lifting bars 161, 162 are lowered, and the pallet P2 is put down on the rollers 137 again, as shown in figure 4E.

The lifting device 160 may be operating electrically, pneumatically or hydraulically, at the designer's choice.

In figure 4B, the lifting operation of the lifting device 160 is illustrated as being executed after the third empty pallet P3 has arrived at the transfer section 133. This is a possibility indeed. However, it is also possible that the lifting device 160 is actuated earlier, and the earliest possible moment is when the second pallet P2 has arrived at the loading section 132. For implementing the present invention, the precise timing of the lifting operation of the lifting device 160 is not essential, as long as it has been completed when the third empty pallet P3 arrives. However, until arrival of the third empty pallet P3, the second pallet P2 has been loaded, as described above, and the lifting operation is easier the earlier it is done because then the weight to be lifted is lower. It is important to note that loading of the second pallet P2 can continue even in an elevated condition, since the palletiser 110 (or its control) will be supplied with information from the lifting device 160 and will be capable of adapting the loading actions for the elevated position of the second pallet P2.

It is preferred that the placing of goods on the pellet is done while the pallet 160 is stationary in vertical direction, i.e. is not being lifted at that moment. It is to be noted that the palletiser 110, after having placed an item and before placing the next item, must reach out and fetch that next item from the item supply line or goods conveying system 20, and this takes some time, in the order of a few seconds, typically between 5 and 10 seconds. With the loading action being a periodic action, wherein the action period consists of an actual placement and withdrawal interval when an item is placed and the placement arm is withdrawn and a refresh interval when the placement arm is used to fetch the next item, it is preferred that the lifting action of the lifting device 160 is synchronised with the loading action of the palletiser 110 in that the lifting action only takes place during the refresh interval. Normally, this will be sufficiently long for the lifting device 160 to lift the pallet from its lowermost position to an uppermost position. If need be, lifting may be performed in multiple steps, each lifting step taking place during a refresh interval.

For lowering of the pallet, similar considerations apply, but more items have been placed onto the pallet in the mean time, so the increased weight will normally be sufficient to quickly lower the pallet in one step, driven by gravity.

## Claims

1. Palletiser station (101), comprising:
a] a bi-directional pallet manoeuvring conveying system (130);
b] a palletiser (110) designed and adapted for loading goods on a pallet;
c] a lifting device (160) adapted for lifting a pallet;
wherein the bi-directional pellet manoeuvring conveying system (130) comprises three consecutive track sections:
a1) a waiting section (131) for an empty pallet;
a2) a loading section (132) adjacent the waiting section (131);
a3) a transfer section (133) adjacent the loading section (132) opposite the waiting section (131), for receiving empty pallets and delivering loaded pallets;
wherein the waiting section (131) is designed and adapted for transporting said empty pallet in a forward direction to the loading section (132);
wherein the palletiser (110) is designed and adapted for loading goods on said pallet while the pallet is kept stationary at the loading section (132);
wherein the transfer section (133) is designed and adapted for receiving a loaded pallet from the loading section (132) and for transporting that loaded pallet in the forward direction away from the loading section (132);
**CHARACTERIZED in that**
the transfer section (133) is designed and adapted for receiving an empty pallet and for transporting said empty pallet in a backward direction to the loading section (132);
**in that** the loading section (132) is designed and adapted for receiving said empty pallet from the transfer section (133) and for transporting said empty pallet in the backward direction to the waiting section (131);
and **in that** the lifting device (160) is designed and adapted for lifting said pallet at the loading section (132) to an elevated position, and for keeping the pallet in the elevated position while the empty pallet is conveyed in the backward direction past the loading section (132) such that the empty pallet passes below the elevated pallet.

2. Palletiser station (101) according to claim 1, wherein the lifting device (160) is designed and adapted for lifting said pallet at the loading section (132) simultaneous with the passing of a subsequent empty pallet in the backward direction from the transfer section (133) to the waiting section (131).

3. Palletiser station (101) according to claim 1, wherein the station is adapted for operating in the following operational phases:
- a first operational phase in which the waiting section (131) conveys a first pallet (P2) in a forward direction to the loading section (132) and the loading section (132) conveys a loaded second pallet (P1) in the forward direction to the transfer section (133);
- a second operational phase in which the loading section (132) keeps the first pallet (P2) stationary and the palletiser (110) loads the first pallet (P2), and the transfer section (133) conveys said loaded second pallet (P1) in the forward direction away from the loading section (132);
- a third operational phase in which the loading section (132) keeps the first pallet (P2) stationary and the palletiser (110) loads the first pallet (P2), and the transfer section (133) conveys an empty third pallet (P3) in a backward direction towards the loading section (132);
- a fourth operational phase in which the lifting device (160) lifts the first pallet (P2) from the loading section (132), and the transfer section (133) conveys the empty third pallet (P3) in the backward direction towards the loading section (132) and the loading section (132) conveys the empty third pallet (P3) in the backward direction towards the waiting section (131);
- a fifth operational phase in which the waiting section (131) keeps the empty third pallet (P3) stationary, the lifting device (160) lowers the first pallet (P2) on the loading section (132) and the palletiser (110) loads the first pallet (P2).

4. Palletiser station according to claim 1 or 2 or 3, wherein the palletiser (110) is adapted to continue loading goods on the pallet (P2) while that pallet (P2) is in the elevated position.

5. Palletiser station according to any of the previous claims, wherein the lifting action of the lifting device (160) is synchronised with the loading action of the palletiser (110).

6. Palletiser station according to claim 5, wherein the lifting action of the lifting device (160) is only executed while the palletiser (110) is reaching to fetch a new item to be loaded.

7. Method for operating the palletiser station according to claim 1.

## Patentansprüche

1. Palettierstation (101), die aufweist:
a) ein Zweirichtungs-Paletten-Manövrier-Fördersystem (130);
b) einen Palettierer (110), der dafür konzipiert und daran angepasst ist, Waren auf eine Palette zu laden;
c) eine Hebevorrichtung (160), die daran angepasst ist, eine Palette zu heben; wobei das Zweirichtungs-Paletten-Manövrier-Fördersystem (130) drei aufeinanderfolgende Bahnabschnitte aufweist:
a1) einen Warteabschnitt (131) für eine leere Palette;
a2) einen Ladeabschnitt (132) benachbart zu dem Warteabschnitt (131);
a3) einen Transferabschnitt (133) benachbart zu dem Ladeabschnitt (132) entgegengesetzt zu dem Warteabschnitt (131) zum Aufnehmen leerer Paletten und Abliefern beladener Paletten;
wobei der Warteabschnitt (131) dafür konzipiert ist und daran angepasst ist, die leere Palette in einer Vorwärtsrichtung zu dem Ladeabschnitt (132) zu transportieren;
wobei der Palettierer (110) dafür konzipiert und daran angepasst ist, Waren auf die Palette zu laden, während die Palette an dem Ladeabschnitt (132) ortsfest gehalten wird;
wobei der Transferabschnitt (133) dafür konzipiert und daran angepasst ist, eine beladene Palette von dem Ladeabschnitt (132) zu empfangen und um diese beladene Palette in die Vorwärtsrichtung weg von dem Ladeabschnitt (132) zu transportieren;
**dadurch gekennzeichnet, dass**
der Transferabschnitt (133) dafür konzipiert und daran angepasst ist, eine leere Palette zu empfangen und die leere Palette in einer Rückwärtsrichtung zu dem Ladeabschnitt (132) zu transportieren;
der Ladeabschnitt (132) dafür konzipiert und daran angepasst ist, die leere Palette von dem Transferabschnitt (133) zu empfangen und die leere Palette in die Rückwärtsrichtung zu dem Warteabschnitt (131) zu transportieren; und
die Hebevorrichtung (160) dafür konzipiert und daran angepasst ist, die Palette an dem Ladeabschnitt (132) in eine erhöhte Position zu heben und die Palette in der erhöhten Position zu halten, während die leere Palette in die Rückwärtsrichtung vorbei an dem Ladeabschnitt (132) befördert wird, so dass die leere Palette unter der erhöhten Palette vorbeigeht.

2. Palettierstation (101) nach Anspruch 1, wobei die Hebevorrichtung (160) dafür konzipiert und daran angepasst ist, die Palette an dem Ladeabschnitt (132) gleichzeitig mit dem Vorbeigehen einer nachfolgenden leeren Palette in der Rückwärtsrichtung von dem Transferabschnitt (133) zu dem Warteabschnitt (131) zu heben.

3. Palettierstation (101) nach Anspruch 1, wobei die Station daran angepasst ist, in den folgenden Betriebsphasen zu arbeiten:
- einer ersten Betriebsphase, in welcher der Warteabschnitt (131) eine erste Palette (P2) in einer Vorwärtsrichtung zu dem Ladeabschnitt (132) befördert und der Ladeabschnitt (132) eine beladene zweite Palette (P1) in der Vorwärtsrichtung zu dem Transferabschnitt (133) befördert;
- einer zweiten Betriebsphase, in welcher der Ladeabschnitt (132) die erste Palette (P2) ortsfest hält und der Palettierer (110) die erste Palette (P2) belädt und der Transferabschnitt (133) die beladene zweite Palette (P1) in die Vorwärtsrichtung weg von dem Ladeabschnitt (132) befördert;
- einer dritten Betriebsphase, in welcher die Ladestation (132) die erste Palette (P2) ortsfest hält und der Palettierer (110) die erste Palette (P2) belädt und der Transferabschnitt (133) eine leere dritte Palette (P3) in einer Rückwärtsrichtung in Richtung des Ladeabschnitts (132) befördert;
- einer vierten Betriebsphase, in welcher die Hebevorrichtung (160) die erste Palette (P2) von dem Ladeabschnitt (132) anhebt und der Transferabschnitt (133) die leere dritte Palette (P3) in der Rückwärtsrichtung in Richtung des Ladeabschnitts (132) befördert und der Ladeabschnitt (132) die leere dritte Palette (P3) in der Rückwärtsrichtung in Richtung des Warteabschnitts (131) befördert;
- einer fünften Betriebsphase, in welcher der Warteabschnitt (131) die leere dritte Palette (P3) ortsfest hält, die Hebevorrichtung (160) die erste Palette (P2) auf den Ladeabschnitt (132) senkt und der Palettierer (110) die erste Palette (P2) belädt.

4. Palettierstation nach Anspruch 1 oder 2 oder 3, wobei der Palettierer (110) daran angepasst ist, weiterhin Waren auf die Palette (P2) zu laden, während diese Palette (P2) in der erhöhten Position ist.

5. Palettierstation nach einem der vorhergehenden Ansprüche, wobei die Hebetätigkeit der Hebevorrichtung (160) mit der Ladetätigkeit des Palettierers (110) synchronisiert ist.

6. Palettierstation nach Anspruch 5, wobei die Hebetätigkeit der Hebevorrichtung (160) nur ausgeführt wird, während der Palettierer (110) greift, um einen neuen Posten, der geladen werden soll, zu holen.

7. Verfahren zum Betreiben der Palettierstation nach Anspruch 1.

## Revendications

1. Station de palettisation (101), comprenant :
a) un système de convoyage et de manœuvre de palette bidirectionnel (130) ;
b) un palettiseur (110) conçu et adapté pour charger de biens sur une palette ;
c) un dispositif de levage (160) adapté pour soulever une palette ;
dans laquelle le système de convoyage et de manœuvre de palette bidirectionnel (130) comprend trois sections de piste consécutives :
a1) une section d'attente (131) pour une palette vide ;
a2) une section de chargement (132) adjacente à la section d'attente (131) ;
a3) une section de transfert (133) adjacente à la section de chargement (132) à l'opposé de la section d'attente (131), pour recevoir des palettes vides et délivrer des palettes chargées ;
dans laquelle la section d'attente (131) est conçue et adaptée pour transporter ladite palette vide dans une direction avant vers la section de chargement (132) ;
dans laquelle le palettiseur (110) est conçu et adapté pour charger des marchandises sur ladite palette quand la palette est maintenue immobile au niveau de la section de chargement (132) ;
dans lequel la section de transfert (133) et conçue et adaptée pour recevoir une palette chargée depuis la section de chargement (132) et pour transporter cette palette chargée dans la direction avant en s'éloignant de la section de chargement (132) ;
**caractérisée en ce que**
la section de transfert (133) est conçue et adaptée pour recevoir une palette vide et pour transporter ladite palette vide dans une direction vers l'arrière vers la section de chargement (132) ;
**en ce que** la section de chargement (132) est conçue et adaptée pour recevoir ladite palette vide depuis la section de transfert (133) et pour transporter ladite palette vide dans la direction vers l'arrière vers la section d'attente (131) ;
et **en ce que** le dispositif de levage (160) est conçu et adapté pour soulever ladite palette au niveau de la section de chargement (132) vers une position soulevée, et pour garder la palette dans la position soulevée quand la palette vide est convoyée dans la direction vers l'arrière au-delà de la section de chargement (132) de telle manière que la palette vide passe sous la palette soulevée.

2. Station de palettisation (101) selon la revendication 1, dans laquelle le dispositif de levage (160) est conçu et adapté pour soulever ladite palette au niveau de la section de chargement (132) simultanément avec le passage d'une palette vide suivante dans la direction vers l'arrière depuis la section de transfert (133) vers la section d'attente (131).

3. Station de palettisation (101) selon la revendication 1, dans laquelle la station est adaptée pour fonctionner dans les phases opérationnelles suivantes ;
une première phase opérationnelle dans laquelle la section d'attente (131) convoie une première palette (P2) dans une direction vers l'avant vers la section de chargement (132) et la section de chargement (132) convoie une seconde palette chargée (P1) dans la direction vers l'avant vers la section de transfert (133) ;
une seconde phase opérationnelle dans laquelle la section de chargement (132) garde la première palette (P2) immobile et le palettiseur (110) charge la première palette (P2), et la section de transfert (133) convoie ladite seconde palette chargée (P1) dans la direction vers l'avant en s'éloignant de la section de chargement (132) ;
une troisième phase opérationnelle dans laquelle la section de chargement (132) garde la première palette (P2) immobile et le palettiseur (110) charge la première palette (P2), et la section de transfert (133) convoie une troisième palette vide (P3) dans une direction vers l'arrière vers la section de chargement (132) ;
une quatrième phase opérationnelle dans laquelle le dispositif de levage (160) soulève la première palette (P2) de la section de chargement (132), et la section de transfert (133) convoie la troisième palette vide (P3) dans la direction vers l'arrière vers la section de chargement (132) et la section de chargement (132) convoie la troisième palette vide (P3) dans la direction vers l'arrière vers la section d'attente (131) ;
une cinquième phase opérationnelle dans laquelle la section d'attente (131) garde la troisième palette vide (P3) immobile, le dispositif de levage (160) abaisse la première palette (P2) sur la section de chargement (132) et le palettiseur (110) charge la première palette (P2).

4. Station de palettisation selon la revendication 1 ou 2 ou 3, dans laquelle le palettiseur (110) est adapté pour continuer à charger des marchandises sur la palette (P2) quand la palette (P2) est dans la position soulevée.

5. Station de palettisation selon l'une quelconque des revendications précédentes, dans laquelle l'action de levage du dispositif de levage (160) est synchronisée avec l'action de levage du palettiseur (110).

6. Station de palettisation selon la revendication 5, dans laquelle l'action de levage du dispositif de levage (160) est seulement exécutée quand le palettiseur (110) va chercher un nouvel article à charger.

7. Procédé d'utilisation de la station de palettisation selon la revendication 1.
